(19) Europäisches Patentamt
European Patent Office
Office européen des brevets

(11) EP 3 067 390 A1

(12) EUROPEAN PATENT APPLICATION
published in accordance with Art. 153(4) EPC

(43) Date of publication:
**14.09.2016 Bulletin 2016/37**

(21) Application number: **14874641.5**

(22) Date of filing: **22.12.2014**

(51) Int Cl.:
***C08L 27/18*** *(2006.01)* ***C08F 214/26*** *(2006.01)*
***C08K 5/09*** *(2006.01)* ***C08K 5/10*** *(2006.01)*
***C08L 67/00*** *(2006.01)* ***C08L 71/00*** *(2006.01)*
***C08L 83/12*** *(2006.01)*

(86) International application number:
**PCT/JP2014/083958**

(87) International publication number:
**WO 2015/098867 (02.07.2015 Gazette 2015/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.12.2013 JP 2013269941**

(71) Applicant: **Daikin Industries, Ltd.**
**Osaka-shi, Osaka 530-8323 (JP)**

(72) Inventors:
- **OKANISHI, Ken**
  **Osaka-shi**
  **Osaka 530-8323 (JP)**
- **KOMIYA, Yoshichika**
  **Osaka-shi**
  **Osaka 530-8323 (JP)**
- **YAMATO, Takafumi**
  **Osaka-shi**
  **Osaka 530-8323 (JP)**
- **MIYAMORI, Tsuyoshi**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

# (54) PROCESSING AID FOR POLYOLEFINS, AND POLYOLEFIN COMPOSITION

(57) The present invention aims to provide a polyolefin composition including: a processing aid for polyolefins that enables disappearance of melt fracture occurred at the start of molding in a short time even when a polyolefin that is a melt-fabricable polymer is extrusion-molded at a high rate; and a specific polyolefin. The present invention relates to a processing aid for polyolefins, including a perfluoroelastomer. The processing aid is intended to be used for extrusion-molding at least one polyolefin selected from the group consisting of low-density polyethylene, linear low-density polyethylene, high-density polyethylene, metallocene linear low-density polyethylene, polypropylene, and polyvinyl chloride.

FIG.1

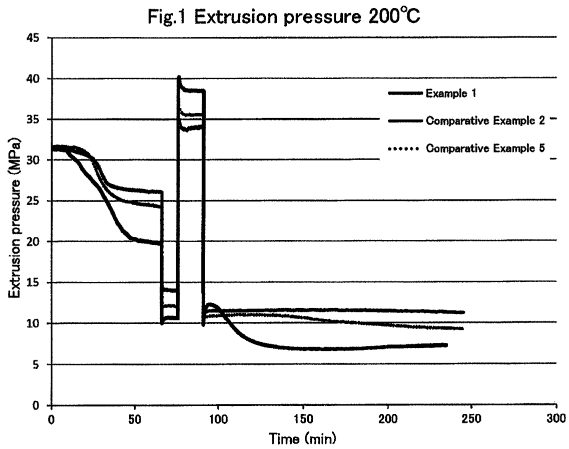


EP 3 067 390 A1

## Description

TECHNICAL FIELD

The present invention relates to processing aids for polyolefins and polyolefin compositions containing the same. More specifically, the present invention relates to a composition containing a processing aid that is suitably used for processing of melt-fabricable polymers.

BACKGROUND ART

Melt-fabricable polymers need to be extrusion-molded at a high extrusion rate upon processing thereof with an aim of achieving higher productivity and lower cost. Melt-fabricable polymer compositions, however, surely have a critical shear rate. If the extrusion rate is higher than the critical shear rate, the surface becomes roughened (phenomenon called melt fracture), and the resulting molded articles are not satisfactory.

A molding method with a higher molding temperature is one example of a method that can achieve a higher extrusion rate and improve the extruding properties while preventing occurrence of melt fracture, thereby solving the above problem. However, high-temperature molding causes pyrolysis of melt-fabricable polymers, which raises other problems such as reduction in mechanical properties of molded articles and coloring of molded articles. In addition, the melt-fabricable polymer has a lower melt viscosity to suffer sagging or deformation before being cooled and solidified. This impairs the dimensional accuracy of molded articles.

Patent Literature 1 discloses, as another method, a method of producing an extrudable composition including the step of simultaneously mixing i) a first fluoroelastomer that has a first Mooney viscosity ML(1+10) at 121°C determined in conformity with ASTM D1646 in an amount of 0.001 to 10 wt% based on the total weight of the extrudable composition, ii) a second fluoroelastomer having a second Mooney viscosity ML(1+10) at 121°C determined in conformity with ASTM D1646 in an amount of 0.001 to 10 wt% based on the total weight of the extrudable composition, and iii) a non-fluorinated melt-fabricable polymer, with a difference between the first and second Mooney viscosities of at least 15.

Patent Literature 2 discloses a method including the steps of: preparing a melt-fabricable polymer composition that contains a melt-fabricable thermoplastic host polymer and an effective amount of an additive composition for processing that contains a specific multimode fluoropolymer; mixing the additive composition for processing and the host polymer for a time enough for thorough mixing of them; and melt-fabricating the polymer composition.

The following documents disclose techniques using a fluoropolymer as a processing aid. Patent Literature 3 discloses an extrudable composition containing a thermoplastic hydrocarbon polymer, a poly(oxyalkylene) polymer, and a fluorocarbon polymer. Patent Literature 4 discloses an extrudable composition containing a resin blend that contains a metallocene linear low-density polyethylene resin and a low-density polyethylene resin, a fluoroelastomer that has a Mooney viscosity ML(1+10) at 121°C of 30 to 60, and a surfactant. Patent Literature 5 discloses a processing aid containing a fluoropolymer that has an acid value of 0.5 KOHmg/g or higher.

These disclosed techniques, however, still fail to achieve the effect of preventing occurrence of melt fracture under a high shear rate condition with a shear rate exceeding 800 $sec^{-1}$.

With an aim of providing a polymer that can give extrudates of high surface quality even extruded at a high rate and can be extruded at a low die pressure, and has a low melting temperature, Patent Literature 6 discloses a processing aid composition for hardly melt-fabricable polymers, essentially containing 2 to 95 parts by weight of a fluorocarbon copolymer and 98 to 5 parts by weight of a tetrafluoroethylene homopolymer or of a copolymer of tetrafluoroethylene and a monomer copolymerizable with tetrafluoroethylene. If the fluorocarbon copolymer is crystalline, the copolymer is in a molten state at a temperature of melt-fabricating the hardly melt-fabricable polymer, and if it is amorphous, the temperature of melt-fabricating the hardly melt-fabricable polymer is higher than the glass transition temperature of the fluorocarbon copolymer. The tetrafluoroethylene homopolymer or the copolymer of tetrafluoroethylene and a monomer copolymerizable with tetrafluoroethylene contains fluorine atoms and hydrogen atoms in a mole ratio of at least 1:1 and is solid at the temperature of melt-fabricating the hardly melt-fabricable polymer.

Patent Literature 7 discloses a low-temperature-decomposable engineering plastic resin composition that can have improved molding processability because it can be molded, for example, at a reduced extrusion pressure and a reduced extrusion torque upon molding of a low-temperature-decomposable engineering plastic. The low-temperature-decomposable engineering plastic resin composition is prepared by compounding a low-temperature-decomposable engineering plastic having a melting point of 200°C or lower and a decomposition temperature of 300°C or lower and a fluororesin formed from a fluoropolymer in which at least one atom selected from the group consisting of a hydrogen atom, a chlorine atom, a bromine atom, and an iodine atom and a fluorine atom are bonded to a carbon atom of the main chain excluding the terminal carbon atom(s) and which is substantially free from a polar functional group reactive with the low-temperature-decomposable engineering plastic.

CITATION LIST

- Patent Literature

Patent Literature 1: JP 4181042 B
Patent Literature 2: JP 2002-544358 T
Patent Literature 3: JP H02-70737 A
Patent Literature 4: JP 2007-510003 T
Patent Literature 5: WO 2011/025052
Patent Literature 6: US 5013792 B
Patent Literature 7: WO 03/044088

SUMMARY OF INVENTION

- Technical Problem

In consideration of the state of the art, the present invention provides a processing aid for polyolefins which enables disappearance of melt fracture occurred at the start of molding in a short time even when a polyolefin that is a melt-fabricable polymer is extrusion-molded at a high rate.

The present invention also provides a polyolefin composition containing such a processing aid for polyolefins and a specific polyolefin.

- Solution to problem

The present inventors intensively studied to find out that a combination of a processing aid for polyolefins containing a perfluoroelastomer and a specific polyolefin enables disappearance of melt fracture occurred at the start of molding in a short time even when a polyolefin blended with such a processing aid is extrusion-molded at a high shear rate. They also found out that addition of a small amount of the processing aid to a specific polyolefin enables dispersion of the processing aid in the form of particles in the polyolefin, with the processing aid having an average dispersed particle size in the polyolefin of 10 $\mu$m or smaller. This enables disappearance of melt fracture in an equal period of time in comparison with conventional techniques.

The present inventors thus arrived at a solution of the above problem, i.e., a polyolefin composition containing a processing aid for polyolefins that contains a perfluoroelastomer and a specific polyolefin. Thereby, the inventors have completed the present invention.

Specifically, the present invention relates to a processing aid for polyolefins including a perfluoroelastomer, the processing aid being intended to be used for extrusion-molding at least one polyolefin selected from the group consisting of low-density polyethylene, linear low-density polyethylene, high-density polyethylene, metallocene linear low-density polyethylene, polypropylene, and polyvinyl chloride. The perfluoroelastomer is preferably a copolymer of tetrafluoroethylene and at least one fluoromonomer selected from the group consisting of:

hexafluoropropylene;
a fluoromonomer represented by the formula (8):

$$CF_2=CF\text{-}ORf^{81}$$

wherein $Rf^{81}$ is a C1-C8 perfluoroalkyl group;
a fluoromonomer represented by the formula (10):

$$CF_2=CFOCF_2ORf^{101}$$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$$CF_2=CFO(CF_2CF(Y)O)_m(CF_2)_nF$$

wherein Y is a fluorine atom or a trifluoromethyl group; m is an integer of 1 to 4; and n is an integer of 1 to 4. The perfluoroelastomer is preferably a copolymer of tetrafluoroethylene and a fluoromonomer represented by the formula (8):

$CF_2$=CF-$ORf^{81}$

wherein $Rf^{81}$ is a C1-C8 perfluoroalkyl group.

The perfluoroelastomer is preferably a copolymer of tetrafluoroethylene and perfluoro(methyl vinyl ether).

The processing aid for polyolefins of the present invention preferably further contains 1 to 99 wt% of at least one surfactant selected from the group consisting of silicone-polyether copolymers, aliphatic polyesters, aromatic polyesters, polyether polyols, amine oxides, carboxylic acids, aliphatic esters, and poly(oxyalkylenes).

The present invention also relates to a polyolefin composition including a processing aid for polyolefins, and a polyolefin, the processing aid for polyolefins containing a perfluoroelastomer, the polyolefin being at least one selected from the group consisting of low-density polyethylene, linear low-density polyethylene, high-density polyethylene, metallocene linear low-density polyethylene, polypropylene, and polyvinyl chloride. The perfluoroelastomer is preferably a copolymer of tetrafluoroethylene and at least one fluoromonomer selected from the group consisting of:

hexafluoropropylene;
a fluoromonomer represented by the formula (8):

$CF_2$=CF-$ORf^{81}$

wherein $Rf^{81}$ is a C1-C8 perfluoroalkyl group;
a fluoromonomer represented by the formula (10):

$CF_2$=$CFOCF_2ORf^{101}$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$CF_2$=$CFO(CF_2CF(Y)O)_m(CF_2)_nF$

wherein Y is a fluorine atom or a trifluoromethyl group; m is an integer of 1 to 4; and n is an integer of 1 to 4. The perfluoroelastomer is preferably a copolymer of tetrafluoroethylene and a fluoromonomer represented by the formula (8):

$CF_2$=CF-$ORf^{81}$

wherein $Rf^{81}$ is a C1-C8 perfluoroalkyl group.

The perfluoroelastomer is preferably a copolymer of tetrafluoroethylene and perfluoro(methyl vinyl ether).

The processing aid for polyolefins preferably further contains 1 to 99 wt% of at least one surfactant selected from the group consisting of silicone-polyether copolymers, aliphatic polyesters, aromatic polyesters, polyether polyols, amine oxides, carboxylic acids, aliphatic esters, and poly(oxyalkylenes).

The processing aid for polyolefins is preferably present in an amount of 0.0005 to 10 wt% based on the total weight of the polyolefin composition.

The present invention is specifically described below.

The present invention relates to a processing aid for polyolefins including a perfluoroelastomer, the processing aid being intended to be used for extrusion-molding at least one polyolefin selected from the group consisting of low-density polyethylene, linear low-density polyethylene, high-density polyethylene, metallocene linear low-density polyethylene, polypropylene, and polyvinyl chloride.

With this configuration, even when the polyolefin composition prepared by adding the processing aid for polyolefins of the present invention to a specific polyolefin is extrusion-molded at a high shear rate, the melt fracture occurred at the start of molding disappears in a short time.

The perfluoroelastomer refers to a fluoropolymer containing 96 to 100 mol% of a polymerized unit based on a perfluoromonomer and 0 to 4 mol% of a polymerized unit based on a monomer that provides a cross-linking site, in all the polymerized units.

The perfluoroelastomer is preferably amorphous. The term "amorphous" means that the melting peak (ΔH) appearing in the DSC (temperature-increasing rate: 10°C/min) is 2.0 J/g or lower.

The fluoromonomer constituting the perfluoroelastomer preferably has at least one double bond. The fluoromonomer is preferably a perfluoromonomer.

The perfluoromonomer is preferably at least one selected from the group consisting of:

tetrafluoroethylene (TFE);
hexafluoropropylene (HFP);
a fluoromonomer represented by the formula (8):

$$CF_2=CF\text{-}ORf^{81}$$

wherein $Rf^{81}$ is a C1-C8 perfluoroalkyl group;
a fluoromonomer represented by the formula (10):

$$CF_2=CFOCF_2ORf^{101}$$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$$CF_2=CFO(CF_2CF(Y)O)_m(CF_2)_nF$$

wherein Y is a fluorine atom or a trifluoromethyl group; m is an integer of 1 to 4; and n is an integer of 1 to 4.

Examples of the fluoromonomer represented by the formula (8) include perfluoro(alkyl vinyl ethers)(PAVE). The fluoromonomer is preferably at least one selected from the group consisting of perfluoro(methyl vinyl ether) (PMVE), perfluoro(ethyl vinyl ether), and perfluoro(propyl vinyl ether), more preferably perfluoro(methyl vinyl ether).

The fluoromonomer represented by the formula (10) is preferably at least one selected from the group consisting of $CF_2=CFOCF_2OCF_3$, $CF_2=CFOCF_2OCF_2CF_3$, and $CF_2=CFOCF_2OCF_2CF_2OCF_3$.

The fluoromonomer represented by the formula (11) is preferably at least one selected from the group consisting of $CF_2=CFOCF_2CF(CF_3)O(CF_2)_3F$, $CF_2=CFO(CF_2CF(CF_3)O)_2(CF_2)_3F$, and $CF_2=CFO(CF_2CF(CF_3)O)_2(CF_2)_2F$.

The perfluoroelastomer may be prepared by polymerizing the perfluoromonomer and a monomer that provides a cross-linking site.

The monomer that provides a cross-linking site is preferably at least one selected from the group consisting of:

a fluoromonomer represented by the formula (12):

$$CX^3_2=CX^3\text{-}R_f^{121}CHR^{121}X^4$$

wherein $X^3$ is a hydrogen atom, a fluorine atom, or $CH_3$; $R_f^{121}$ is a fluoroalkylene group, a perfluoroalkylene group, a fluoro(poly)oxyalkylene group, or a perfluoro(poly)oxyalkylene group; $R^{121}$ is a hydrogen atom or $CH_3$; and $X^4$ is a iodine atom or a bromine atom;
a fluoromonomer represented by the formula (13):

$$CX^3_2=CX^3\text{-}R_f^{131}X^4$$

wherein $X^3$ is a hydrogen atom, a fluorine atom, or $CH_3$; $R_f^{131}$ is a fluoroalkylene group, a perfluoroalkylene group, a fluoropolyoxyalkylene group, or a perfluoropolyoxyalkylene group; and $X^4$ is a iodine atom or a bromine atom;
a fluoromonomer represented by the formula (14):

$$CF_2=CFO(CF_2CF(CF_3)O)_m(CF_2)_n\text{-}X^5$$

wherein m is an integer of 0 to 5; n is an integer of 1 to 3; $X^5$ is a cyano group, a carboxyl group, an alkoxycarbonyl group, an iodine atom, a bromine atom, or $-CH_2I$;
a fluoromonomer represented by the formula (15):

$CH_2=CFCF_2O(CF(CF_3)CF_2O)_m(CF(CF_3))_n-X^6$

wherein m is an integer of 0 to 5; n is an integer of 1 to 3; $X^6$ is a cyano group, a carboxyl group, an alkoxycarbonyl group, an iodine atom, a bromine atom, or $-CH_2OH$; and
a monomer represented by the formula (16):

$CR^{162}R^{163}=CR^{164}-Z-CR^{165}=CR^{166}R^{167}$

wherein $R^{162}$, $R^{163}$, $R^{164}$, $R^{165}$, $R^{166}$, and $R^{167}$ may be the same as or different from each other, and are each a hydrogen atom or a C1-C5 alkyl group; Z is a linear or branched C1-C18 alkylene group which may optionally have an oxygen atom, a C3-C18 cycloalkylene group, a C1-C10 alkylene or oxyalkylene group which is at least partly fluorinated, or a (per)fluoropolyoxyalkylene group represented by the formula: $-(Q)_p-CF_2O-(CF_2CF_2O)_m(CF_2O)n-CF_2-(Q)_p-$ (wherein Q is an alkylene or oxyalkylene group; p is 0 or 1; and m/n is 0.2 to 5), and having a molecular weight of 500 to 10000.

$X^3$ is preferably a fluorine atom. $R_f^{121}$ and $R_f^{131}$ are each preferably a C1-C5 perfluoroalkylene group. $R^{121}$ is preferably a hydrogen atom.

The monomer that provides a cross-linking site is preferably at least one selected from the group consisting of $CF_2=CFOCF_2CF(CF_3)OCF_2CF_2CN$, $CF_2=CFOCF_2CF(CF_3)OCF_2CF_2COOH$, $CF_2=CFOCF_2CF(CF_3)\ OCF_2CF_2CH_2I$, $CF_2=CFOCF_2CF_2CH_2I$,
$CH_2=CFCF_2OCF\ (CF_3)\ CF_2OCF\ (CF_3)\ CN$,
$CH_2=CFCF_2OCF\ (CF_3)\ CF_2OCF\ (CF_3)\ COOH$,
$CH_2=CFCF_2OCF\ (CF_3)\ CF_2OCF\ (CF_3)\ CH_2OH$, $CH_2=CHCF_2CF_2I$,
$CH_2=CH(CF_2)_2CH=CH_2$, $CH_2=CH(CF_2)_6CH=CH_2$, and $CF_2=CFO\ (CF_2)_5CN$, more preferably at least one selected from the group consisting of $CF_2=CFOCF_2CF(CF_3)OCF_2CF_2CN$ and $CF_2=CFOCF_2CF_2CH_2I$.

The perfluoroelastomer is preferably prepared by polymerizing a perfluoromonomer alone or monomers consisting of a perfluoromonomer and a monomer that provides a cross-linking site. Polymerization of a perfluoromonomer alone or monomers consisting of a perfluoromonomer and a monomer that provides a cross-linking site enables production of particles of the perfluoroelastomer.

The perfluoroelastomer is preferably a copolymer of tetrafluoroethylene (TFE) and at least one fluoromonomer selected from the group consisting of:

hexafluoropropylene (HFP);
a fluoromonomer represented by the formula (8):

$CF_2=CF-ORf^{81}$

wherein $Rf^{81}$ is a C1-C8 perfluoroalkyl group;
a fluoromonomer represented by the formula (10):

$CF_2=CFOCF_2ORf^{101}$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$CF_2=CFO(CF_2CF(Y)O)_m(CF_2)_nF$

wherein Y is a fluorine atom or a trifluoromethyl group; m is an integer of 1 to 4; and n is an integer of 1 to 4.

The perfluoroelastomer is preferably a perfluoroelastomer containing TFE, for example, at least one selected from the group consisting of a copolymer of TFE and a fluoromonomer represented by the formula (8), (10), or (11), and a copolymer of TFE, a fluoromonomer represented by the formula (8), (10), or (11), and a monomer that provides a cross-linking site.

In the case of the TFE/PAVE copolymer, the compositional ratio is preferably 45 to 90/10 to 55 (mol%), more preferably 55 to 80/20 to 45, still more preferably 55 to 70/30 to 45.

In the case of the copolymer of TFE/PAVE/monomer that provides a cross-linking site, the compositional ratio is preferably 45 to 89.9/10 to 54.9/0.01 to 4 (mol%), more preferably 55 to 79.9/20 to 44.9/0.1 to 3.5, still more preferably 55 to 69.8/30 to 44.8/0.2 to 3.

In the case of the copolymer of TFE/C4-C12 fluoromonomer represented by the formula (8), (10), or (11), the compositional ratio is preferably 50 to 90/10 to 50 (mol%), more preferably 60 to 88/12 to 40, still more preferably 65 to 85/15 to 35.

In the case of the copolymer of TFE/C4-C12 fluoromonomer represented by the formula (8), (10), or (11)/monomer that provides a cross-linking site, the compositional ratio is preferably 50 to 89.9/10 to 49.9/0.01 to 4 (mol%), more preferably 60 to 87.9/12 to 39.9/0.1 to 3.5, still more preferably 65 to 84.8/15 to 34.8/0.2 to 3.

If the compositional ratio is beyond the above ranges, the copolymer fails to have rubber elasticity and tends to have resin-like properties.

The monomer that provides a cross-linking site is as described above.

The perfluoroelastomer is preferably at least one selected from the group consisting of a copolymer of TFE/fluoromonomer represented by the formula (11), a copolymer of TFE/fluoromonomer represented by the formula (11)/monomer that provides a cross-linking site, a copolymer of TFE/fluoromonomer represented by the formula (8), and a copolymer of TFE/fluoromonomer represented by the formula (8)/monomer that provides a cross-linking site.

Examples of the perfluoroelastomer also include perfluoroelastomers disclosed in WO 97/24381, JP S61-57324 B, JP H04-81608 B, and JP H05-13961 B.

In particular, the perfluoroelastomer is preferably a copolymer of TFE/fluoromonomer represented by the formula (8).

The processing aid may contain two or more of the above perfluoroelastomers, and preferably contains a copolymer of TFE/fluoromonomer represented by the formula (8) alone, more preferably a copolymer of TFE/perfluoro(methyl vinyl ether).

The perfluoroelastomer preferably has at least one group selected from the group consisting of $-CONH_2$, -OCOOR (wherein R is a C1-C6 alkyl group), $-CH_2OH$, -COF, and -COOH at an end of the main chain. The perfluoroelastomer having such a functional group at an end of the main chain improves the affinity between the metal surface of a die and the processing aid. Accordingly, when used for a processing aid, the perfluoroelastomer improves the pressure-decreasing rate and increases the amount of pressure decrease.

The functional group can be introduced into the perfluoroelastomer by appropriately selecting a polymerization initiator or a monomer having the functional group at a side chain used in the polymerization.

R in the group represented by -OCOOR is a C1-C6 alkyl group, preferably a C1-C5 alkyl group, more preferably a C1-C4 alkyl group. R is still more preferably a methyl group, an ethyl group, an n-propyl group, or an iso-propyl group.

The perfluoroelastomer may have a cross-linking site but preferably does not contain a monomer unit that provides a cross-linking site because the presence of a cross-linking site leads to gelation, resulting in molding defects (e.g., molded article with fish eyes).

The monomer unit composition of the perfluoroelastomer can be determined by NMR, FT-IR, elemental analysis, and X-ray fluorescence analysis in any appropriate combination in accordance with the types of monomers.

The perfluoroelastomer can be produced by any known polymerization method, such as suspension polymerization, solution polymerization, or emulsion polymerization, using any monomer that is to be a polymerized unit of the perfluoroelastomer, a polymerization initiator, a chain transfer agent, a surfactant, an aqueous medium, and other components.

In the polymerization, the conditions such as temperature and pressure and use of additives such as a polymerization initiator may be appropriately selected in accordance with the composition or amount of the desired perfluoroelastomer.

Preferred among the polymerization methods is emulsion polymerization in which a surfactant is used. A wide variety of emulsifiers may be used in the emulsion polymerization, and a salt of a carboxylic acid having a fluorocarbon chain or a fluoropolyether chain is preferred in order to suppress a chain transfer reaction to emulsifier molecules which may occur during the polymerization. The amount of the emulsifier is preferably about 0.05 to 2 wt%, more preferably 0.2 to 1.5 wt% of the amount of water added.

If the perfluoroelastomer is a perfluoroelastomer aqueous dispersion produced by emulsion polymerization, for example, the perfluoroelastomer is preferably in the form of particles.

The perfluoroelastomer particles in the aqueous dispersion preferably have a volume average particle size of 0.1 to 700 nm. The perfluoroelastomer particles having a volume average particle size within the above range can be present stably in the aqueous dispersion.

The volume average particle size of the perfluoroelastomer particles is more preferably 1 nm or greater, still more preferably 10 nm or greater, and is more preferably 400 nm or smaller, still more preferably 200 nm or smaller.

The volume average particle size is determined by dynamic light scattering. The aqueous dispersion obtained by polymerization is diluted 10 times with pure water to provide an aqueous dispersion for particle size measurement. The particle size is measured from 70 measurement processes using ELSZ-1000S (Otsuka Electronics Co., Ltd.) at 25°C. The solvent (water) had a refractive index of 1.3328 and a viscosity of 0.8878. The average value of the volume distributions is defined as the volume average particle size.

The perfluoroelastomer particles contained in the perfluoroelastomer aqueous dispersion may be formed into a powder or crumb of the perfluoroelastomer by coagulation of the particles and dry-removal of the moisture contained in the resulting coagulated mass.

The coagulation is preferably performed by any known method such as addition of an inorganic salt (e.g., aluminum sulfate) or an inorganic acid, application of a mechanical shearing force, or freezing of the dispersion.

The drying may be performed by any method that can remove the moisture without deteriorating the perfluoroelastomer itself, and is usually a method performed at 50°C to 150°C for 5 to 100 hours. The drying may be performed in vacuo or with hot air at atmospheric pressure.

For excellent dispersibility in a polyolefin, the perfluoroelastomer preferably has a glass transition temperature of -70°C or higher, more preferably -50°C or higher, still more preferably -30°C or higher. In order to achieve desired effects even in molding a polyolefin at low temperature, the glass transition temperature thereof is preferably 5°C or lower, more preferably 0°C or lower, still more preferably -3°C or lower.

The glass transition temperature can be determined as the temperature indicated by the middle point of two intersections between each of the extended lines of the base lines before and after the secondary transition of the DSC curve and the tangent at the inflection point of the DSC curve. Here, the DSC curve can be obtained by heating 10 mg of a test sample at 10°C/min using a differential scanning calorimeter (DSC822e, Mettler-Toledo International Inc.).

For good heat resistance, the perfluoroelastomer preferably has a Mooney viscosity $ML_{1+20}$ at 170°C of 10 or higher, more preferably 40 or higher, still more preferably 50 or higher. For good processability, the Mooney viscosity $ML_{1+20}$ at 170°C is preferably 150 or lower, more preferably 120 or lower.

The Mooney viscosity can be determined at 100°C or 170°C using the MV2000E Mooney viscometer (Alpha Technologies Co.) in conformity with JIS K6300.

The amount of the perfluoroelastomer is preferably 1 to 100 wt% in the processing aid.

The processing aid for polyolefins of the present invention may contain an anti re-agglomerating agent.

Containing the anti re-agglomerating agent suppresses sticking of the perfluoroelastomer.

The anti re-agglomerating agent is preferably a powder of an inorganic compound. For example, the anti re-agglomerating agent is preferably a powder of any of inorganic compounds that are to be mentioned hereinbelow as examples of a filler, a colorant, or an acid acceptor.

The anti re-agglomerating agent may be any of those usually used as fillers, colorants, or acid acceptors.

Examples of the filler include barium sulfate, calcium carbonate, graphite, talc, and silica.

Examples of the colorant include metal oxides such as titanium oxide, iron oxide, and molybdenum oxide.

Examples of the acid acceptor include magnesium oxide, calcium oxide, and lead oxide.

The anti re-agglomerating agent is preferably any of the fillers. The anti re-agglomerating agent is more preferably at least one selected from the group consisting of talc, silica, and calcium carbonate.

The anti re-agglomerating agent is preferably a powder having an average particle size of 0.01 μm or greater and 50 μm or smaller. The average particle size of the powder is more preferably 0.05 μm or greater and 30 μm or smaller, still more preferably 0.1 μm or greater and 10 μm or smaller. The average particle size of the anti re-agglomerating agent is a value determined in conformity with ISO 13320-1.

The anti re-agglomerating agent may be surface-treated with a coupling agent, if necessary.

The amount of the anti re-agglomerating agent is preferably 1 to 30 parts by weight, more preferably 3 to 20 parts by weight, still more preferably 5 to 15 parts by weight, in 100 parts by weight of the perfluoroelastomer.

One anti re-agglomerating agent may be used alone or two or more anti re-agglomerating agents may be used in combination.

The processing aid for polyolefins of the present invention may further contain a surfactant.

Combination use of the perfluoroelastomer and a surfactant can further improve the performance of the perfluoroelastomer as a processing aid.

The surfactant is a compound having a lower melt viscosity than the perfluoroelastomer at a molding temperature. When contained in the polyolefin composition to be mentioned later, the surfactant is preferably a compound that has a lower melt viscosity than a melt-fabricable resin at a molding temperature and can wet the surface of the perfluoroelastomer.

The surfactant is preferably at least one compound selected from the group consisting of silicone-polyether copolymers, aliphatic polyesters, aromatic polyesters, polyether polyols, amine oxides, carboxylic acids, aliphatic esters, and poly(oxyalkylenes). More preferred among these are poly(oxyalkylenes).

Preferred among the poly(oxyalkylenes) is polyethylene glycol. The polyethylene glycol preferably has a number average molecular weight of 50 to 20000, more preferably 1000 to 15000, still more preferably 2000 to 9500.

The number average molecular weight of the polyethylene glycol is a value calculated from the hydroxyl value determined in conformity with JIS K0070.

Preferred among the aliphatic polyesters is polycaprolactone. The polycaprolactone preferably has a number average molecular weight of 1000 to 32000, more preferably 2000 to 10000, still more preferably 2000 to 4000.

The amount of the surfactant is preferably 1 to 99 wt%, more preferably 5 to 90 wt%, still more preferably 10 to 80 wt%, particularly preferably 20 to 70 wt%, in the processing aid. The amount of the surfactant is also preferably 50 wt% or more, more preferably not less than 50 wt%.

With a high molding temperature (about 280°C or higher), the processing aid of the present invention preferably consists of a fluoroelastomer. With a molding temperature of about 250°C or lower, the processing aid preferably contains a fluoroelastomer and a surfactant.

When the processing aid containing a perfluoroelastomer is added to a specific polyolefin to be mentioned later, the processing aid is dispersed in the form of particles in the specific polyolefin and the processing aid has an average dispersed particle size of 10 μm or smaller in the polyolefin. This enables disappearance of melt fracture in an equal period of time in comparison with conventional techniques.

Such a polyolefin composition that is a composition containing the aforementioned processing aid for polyolefins and a polyolefin, the processing aid for polyolefins containing a perfluoroelastomer, the polyolefin being at least one selected from the group consisting of low-density polyethylene, linear low-density polyethylene, high-density polyethylene, metallocene linear low-density polyethylene, polypropylene, and polyvinyl chloride is also one aspect of the present invention.

The polyolefin in the polyolefin composition of the present invention is at least one selected from the group consisting of low-density polyethylene (LDPE), linear low-density polyethylene (LLDPE), high-density polyethylene (HDPE), metallocene linear low-density polyethylene (mLLDPE), polypropylene (PP), and polyvinyl chloride (PVC).

The polyolefin is more preferably polyethylene or polypropylene, still more preferably polyethylene.

The polyolefin preferably has a melt-fabricable temperature of 100°C to 350°C. The polyolefin may or may not have crystallizability.

The polyolefin, if having crystallizability, preferably has a melting point of 80°C to 300°C, more preferably 100°C to 200°C. A non-crystallizable polyolefin preferably has substantially the same fabricable temperature as a crystallizable polyolefin whose melting point range is known.

The melting point of a crystallizable polyolefin can be determined using a DSC device.

The polyolefin can be synthesized by any conventionally known method in accordance with the type thereof.

The polyolefin may be in any form such as powder, granules, or pellets. In order to efficiently melt the polyolefin and to disperse the processing aid for polyolefins, the polyolefin is preferably in the form of pellets in the polyolefin composition of the present invention.

The polyolefin composition of the present invention is a dispersion of the processing aid for polyolefins in the form of fine particles in the polyolefin. The polyolefin composition in such a form can prevent occurrence of molding defects such as visually observable contaminants in thin molded articles and poor surface smoothness.

In the polyolefin composition of the present invention, the processing aid for polyolefins in the polyolefin has an average dispersed particle size of 10 μm or smaller. The processing aid for polyolefins having an average dispersed particle size of 10 μm or smaller can more homogeneously attach to the die surface.

The average dispersed particle size of the processing aid for polyolefins is preferably 7 μm or smaller, more preferably 5 μm or smaller. The average dispersed particle size thereof is still more preferably 3 μm or smaller.

The lower limit of the average dispersed particle size may be any value, and may be 0.1 μm.

The average dispersed particle size of the processing aid for polyolefins can be determined as follows. Specifically, the polyolefin composition of the present invention is microscopically observed using a confocal laser microscope. Alternatively, an ultrathin slice is cut out of a pressed sheet or a pellet prepared from the polyolefin composition of the present invention, and is microscopically observed using a transmission electron microscope (TEM) or a reflected light microscope. Then, the resulting image is binarized using an optical analyzer.

The polyolefin composition of the present invention may further contain any other additional components, if necessary, in addition to the processing aid for polyolefins and a polyolefin.

Examples of the additional components include ultraviolet absorbers; flame retardants; reinforcing materials such as glass fibers and glass powder; stabilizers such as minerals and flakes; lubricants such as silicone oil and molybdenum disulfide; pigments such as titanium dioxide and red iron oxide; conductive agents such as carbon black; impact-resistance improvers such as rubber; antioxidants such as hindered phenol antioxidants and phosphorus antioxidants; core-forming agents such as metal salts and acetals of sorbitol; and other additives recorded in the positive list that is formulated as voluntary standards by Japan Hygienic Olefin And Styrene Plastics Association.

The polyolefin composition of the present invention preferably contains 0.0005 to 10 wt% of the processing aid for polyolefins based on the total weight of the composition. The polyolefin composition of the present invention containing the processing aid for polyolefins at a proportion within the above range can be used as a molding material for producing molded articles, or can be processed into a masterbatch for processing aids. The amount of the processing aid for polyolefins in the polyolefin composition of the present invention is preferably 0.001 to 7 wt%, more preferably 0.0025 to 5 wt% based on the total weight of the composition.

Especially when the polyolefin composition of the present invention is used as a molding material, the wt% ratio of the perfluoroelastomer to the polyolefin in the polyolefin composition of the present invention is preferably 1 to 0.00005 wt%. The wt% ratio thereof is more preferably 0.5 to 0.0001 wt%, still more preferably 0.2 to 0.005 wt%.

The masterbatch for processing aids prepared from the polyolefin composition of the present invention can be suitably used as a processing aid in molding polyolefins.

In the masterbatch for processing aids prepared from the polyolefin composition of the present invention, the processing aid for polyolefins is uniformly dispersed in the polyolefin. Thus, adding the masterbatch in molding polyolefins can improve the processability in molding polyolefins, such as decreases in extrusion torque and extrusion pressure.

Examples of the polyolefin include the same polyolefins as mentioned above, and the polyolefin is preferably polyethylene or polypropylene, more preferably polyethylene.

The masterbatch for processing aids may be in any form such as powder, granules, or pellets. In order to keep the processing aid for polyolefins of the present invention in the state of being finely dispersed in the polyolefin, the masterbatch is preferably in the form of pellets obtained by a melt-kneading process.

The melt-kneading is preferably performed at an extrusion temperature higher than the melting point of the perfluoroelastomer. The extrusion temperature is preferably not lower than the melting point, and the extrusion temperature is more preferably 10°C or more higher than the melting point.

For easy melt-fabrication, the wt% ratio of the perfluoroelastomer to the polyolefin in the masterbatch for processing aids is preferably 0.05 to 10 wt%, more preferably 0.1 to 5 wt%.

The masterbatch for processing aids may further contain any other additional components, if necessary, in addition to the processing aid for polyolefins and the polyolefin.

The additional components may be any components, and examples thereof include the same components as those to be contained in the composition of the present invention.

The masterbatch for processing aids can be obtained by kneading, at 100°C to 350°C, a matter prepared by adding the perfluoroelastomer and other components as desired to the polyolefin.

Such a use, in molding polyolefins, of the composition containing a processing aid for polyolefins and a polyolefin, the processing aid for polyolefins containing a perfluoroelastomer, the polyolefin being at least one selected from the group consisting of low-density polyethylene, linear low-density polyethylene, high-density polyethylene, metallocene linear low-density polyethylene, polypropylene, and polyvinyl chloride, is also one preferred embodiment of the present invention.

The present invention also relates to a molded article obtained by molding the aforementioned polyolefin composition of the present invention.

The molding may be performed by preparing the polyolefin composition of the present invention in advance, putting the composition into a molding device, and then melting and extruding the composition, or may be performed by putting the perfluoroelastomer, the polyolefin, and other components as desired into a molding device at once, and then melting and extruding the mixture, or may be performed by putting the masterbatch for processing aids and the polyolefin into a molding device at once, and then melting and extruding the mixture.

The polyolefin composition may be molded by any method such as extrusion molding, injection molding, or blow molding. In order to effectively enjoy the molding processability, extrusion molding is preferred.

The molding may be performed under any conditions, and the conditions may be appropriately adjusted in accordance with the composition and amount of the polyolefin composition to be used, the shape and size of a desired molded article, and other factors.

The molding temperature is usually not lower than the melting point of the polyolefin in the polyolefin composition of the present invention but lower than the lower temperature selected from the decomposition temperatures of the perfluoroelastomer and the polyolefin, and is within the range of 100°C to 350°C.

In the case of extrusion molding, the molding temperature is also referred to as the extrusion temperature.

The polyolefin composition of the present invention enables disappearance of melt fracture occurred at the start of molding in a short time even when extrusion-molded at a high extrusion rate. Further, adding only a small amount of the processing aid that is a perfluoroelastomer to a specific polyolefin enables disappearance of melt fracture in an equal period of time in comparison with conventional techniques. Thus, the polyolefin composition can be molded at a high temperature and at a high molding rate. For example, the molding can be performed at a molding temperature of 280°C or higher, and can be performed at a shear rate of 800 to 2500 $sec^{-1}$.

As mentioned above, a method of producing a molded article including a step of providing a polyolefin composition by mixing the perfluoroelastomer and the polyolefin and a step of providing a molded article by molding the polyolefin composition at 220°C or higher is also one aspect of the present invention. Production of a molded article by such a production method including high-temperature molding enables a decrease in melt viscosity of the polyolefin that is a melt-fabricable polymer, likely improving the molding processability and the appearance of the molded article.

Further, molding the polyolefin composition at a shear rate of 800 to 2500 $sec^{-1}$ in the step of providing a molded article is also one preferred embodiment of the present invention. Since such a production method includes molding at a high rate, the method is expected to improve the productivity.

In the step of providing a polyolefin composition in the production method, the composition is preferably obtained by mixing the perfluoroelastomer and the polyolefin in a wt% ratio of 0.0001 to 1 wt%.

The molded article of the present invention may have any of various shapes, such as a sheet shape, a film shape, a rod shape, a pipe shape, or fibrous shape.

The molded article may be used in any application in accordance with the type of the polyolefin used. For example, the molded article can be suitably used in applications strongly requiring mainly physical properties, such as mechanical properties, and surface properties.

Examples of uses of the molded article include films, bags, coating materials, tablewares such as containers for beverages, electric wires, cables, pipes, fibers, bottles, gasoline tanks, and other molded articles in various industries.

- Advantageous Effects of Invention

The composition including the processing aid for polyolefins of the present invention has the aforementioned configuration. Thus, the composition enables disappearance of melt fracture occurred at the start of molding in a short time even when a polyolefin that is a melt-fabricable polymer is extrusion-molded at a high extruding rate.

## BRIEF DESCRIPTION OF DRAWINGS

Fig. 1 is a chart of die pressure changes over time in extrusion processes of Example 1 and Comparative Examples 2 and 5.
Fig. 2 is a chart of die pressure changes over time in extrusion processes of Examples 10 to 13 and Comparative Examples 6 to 8.
Fig. 3 is a chart of die pressure changes over time in extrusion processes of Examples 14 to 16 and Comparative Examples 9 to 11.
Fig. 4 is a chart of die pressure changes over time in extrusion processes of Examples 14 and 17 to 20 and Comparative Examples 9 to 12.
Fig. 5 is a chart of die pressure changes over time in extrusion processes of Examples 21 to 23 and Comparative Example 13.
Fig. 6 is a chart of die pressure changes over time in extrusion processes of Examples 24 to 26 and Comparative Example 14.
Fig. 7 is a chart of die pressure changes over time in extrusion processes of Examples 27 to 29 and Comparative Example 15.

## DESCRIPTION OF EMBODIMENTS

The present invention will be more specifically described referring to examples and comparative examples. Still, the invention is not limited to these examples.

The measured values described in the following examples and comparative examples are values determined by the following methods.

1. Composition of copolymer

The composition of the copolymer was determined using a $^{19}$F-NMR device (AC300P, Bruker Corp.).

2. Melt flow rate (MFR)

The melt flow rate was determined in conformity with ASTM D3159.

MFR measurement for PVDF: 240°C, 49 N
MFR measurement for TFE/HFP/VdF: 265°C, 49 N

3. Mooney viscosity ($ML_{1+20}$)

The Mooney viscosity ($ML_{1+20}$) was determined at 170°C in conformity with JIS K6300-1.

4. Melting point (mp)

The temperature corresponding to the maximum value on a melting heat curve obtained using a DSC device (Seiko Instruments Inc.) at a temperature increasing rate of 10°C/min was defined as the melting point.

5. Melt fracture disappearance time

A polyolefin alone was extruded until the pressure was stabilized with melt fracture occurred on the entire surface. At the time when the screw of the extruder became visible, the materials such as a processing aid of each composition were put into a hopper. This timing was defined as 0. Then, the period of time from 0 to the time when the melt fracture disappeared and the entire surface of the molded article became smooth was defined as the melt fracture disappearance time. The disappearance of the melt fracture was confirmed by visual observation and touch examination.

If the visual observation and touch examination confirm that the entire surface does not have a gloss, smooth surface with no melt fracture but have a stripe-like, entirely or partially undulated surface, this state is called "shark skin" herein.

6. Pressure decrease and pressure stabilization time

In the extrusion evaluation to be mentioned later, the extrusion starts with an initial extrusion pressure (initial pressure) observed when linear low-density polyethylene alone is used without addition of a processing aid. The pressure is then decreased as a processing aid is added and the effect thereof is exerted, and finally the pressure is stabilized at substantially a constant pressure (stabilized pressure). The difference between the initial pressure and the stabilized pressure was defined as the pressure decrease. The period of time until the pressure reaches the stabilized pressure was defined as the pressure stabilization time.

<Preparation of processing aid>

The fluoropolymers PFEL 1 to PFEL 9 used in Examples 1 to 24 were produced with the compositions shown in Table 1 by substantially the same method as the polymerization disclosed in the examples of WO 01/023470 and WO 99/50319. In the examples, these fluoropolymers produced were each mixed with a anti re-agglomerating agent in a weight ratio (fluoropolymer/anti re-agglomerating agent) of 90/10. The resulting mixtures were used as processing aids.

The anti re-agglomerating agent used was a mixture of talc, silica, and calcium carbonate prepared in advance.

The fluoropolymer PFEL 4 + PEG used in Example 25 and the fluoropolymer PFEL 7 + PEG used in Example 26 were each prepared by mixing the corresponding fluoropolymer produced and polyethylene glycol (number average molecular weight: 8675) in a weight ratio (fluoropolymer/polyethylene glycol) of 1/1. The resulting mixtures were used as processing aids.

The fluoropolymer FKM (fluororubber) used in Comparative Examples 2, 6, and 9 was produced with the composition shown in Table 2 by substantially the same method as the polymerization disclosed in the examples of JP 5140902 B. In Comparative Examples 2, 6, and 9, this fluoropolymer produced was mixed with a anti re-agglomerating agent in a weight ratio (fluoropolymer/anti re-agglomerating agent) of 90/10. The resulting mixture was used as a processing aid. The anti re-agglomerating agent was the same as in Example 1.

The FKM + PEG used in Comparative Examples 3, 7, and 10 was prepared by mixing the fluoropolymer FKM (fluororubber) used in Comparative Examples 2, 6, and 9 with PEG in a weight ratio (FKM/PEG) of 1/2. The resulting mixture was used as a processing aid. PEG was the same as in Example 25.

The fluoropolymer PVDF used in Comparative Example 4 was NEOFLON VDF VP-825 (Daikin Industries, Ltd.).

The fluoropolymer (tetrafluoroethylene (TFE)/hexafluoropropylene (HFP)/vinylidene fluoride (VDF) copolymer) used in Comparative Examples 5, 8, and 11 to 15 was produced with the composition shown in Table 2 by substantially the same method as disclosed in the examples of JP 4834971 B and US 6277919 B1. In Comparative Examples 5, 8, and 11 to 15, this fluoropolymer was used as a processing aid.

(Production of masterbatch)

The processing aid was mixed with linear low-density polyethylene (LLDPE 1002YB, ExxonMobil Corp.) such that the amount of the processing aid was 5 wt% based on the sum of the weights of the linear low-density polyethylene and the processing aid, and then 0.1 wt% of an antioxidant was mixed therewith. The mixture was put into a twin-screw extruder (Labo Plastomill 30C150, screw L/D: 25, Toyo Seiki Seisakusho, Ltd.) and was processed at a screw rotational speed of 80 rpm. Thereby, pellets containing the processing aid were obtained. The obtained pellets containing the processing aid were mixed using a tumbler mixer. The mixture was processed at a screw rotational speed of 100 rpm so as to improve the dispersion homogeneity of the processing aid in the resulting masterbatch while the other conditions were the same as for providing the pellets. Thereby, a processing aid-containing masterbatch containing the processing and the polyolefin was obtained.

The temperature conditions in extrusion were as follows.

- Cylinder temperature: 150°C, 170°C, and 180°C
- Die temperature: 180°C

An ultrathin slice was cut out of the resulting pellet and was microscopically observed using a reflected light microscope. The resulting image was binarized using an optical analyzer. This confirmed that the processing aid in the form of fine particles was dispersed in the linear low-density polyethylene in the resulting pellets. The average dispersed particle size in the resulting pellets, determined on the binarized image, was 5 μm or smaller.

(Extrusion evaluation 1)

(Examples 1 to 9)

The masterbatch containing the processing aid (one of PFELs 1 to 9 + anti re-agglomerating agent) molded using the above twin-screw extruder was added to and tumble-mixed with linear low-density polyethylene (LLDPE 1201XV, ExxonMobil Corp.) such that the amount of the masterbatch was 1 wt% based on the sum of the weights of the linear low-density polyethylene and the masterbatch. The mixture was extruded using a single screw extruder (Rheomex OS, HAAKE, L/D: 33, screw diameter: 20 mm) at a cylinder temperature of 180°C to 200°C, a die temperature of 200°C, and a screw rotational speed of 30 rpm. The die pressure change was observed for 60 minutes. Then, the screw rotational speed was successively changed to 10 rpm, 80 rpm, and 5 rpm, and the die pressure change was observed respectively for 10 minutes, 15 minutes, and 120 minutes.

(Comparative Example 1)

The extrusion evaluation was performed in the same manner as in Examples 1 to 9 except that the linear low-density polyethylene (LLDPE 1201XV, ExxonMobil Corp.) alone was extruded using a single screw extruder.

(Comparative Examples 2 to 5)

The extrusion evaluation was performed in the same manner as in Comparative Example 1 except that the masterbatch containing the processing aid (disclosed in Table 3) molded using the twin-screw extruder was added to and tumble-mixed with the linear low-density polyethylene (LLDPE 1201XV, ExxonMobil Corp.) such that the amount of the masterbatch was 1 wt% based on the sum of the weights of the linear low-density polyethylene and the masterbatch.

Tables 1 and 2 show the compositions of the fluoropolymers used in the examples and the comparative examples. Table 3 shows the results of the extrusion evaluations in Examples 1 to 9 and Comparative Examples 1 to 5. Fig. 1 shows the die pressure changes over time in the extrusion processes of Example 1 and Comparative Examples 2 and 5.

[Table 1]

| Fluoropolymer | $ML_{1+20}$ (170°C) | Composition of fluoropolymer (mol%) | | |
|---|---|---|---|---|
| | | TFE | PMVE | CNVE |
| PFEL 1 | 83 | 57.6 | 42.4 | 0 |
| PFEL 2 | 22 | 58.4 | 41.6 | 0 |
| PFEL 3 | 48 | 58.7 | 41.3 | 0 |
| PFEL 4 | 65 | 56.9 | 43.1 | 0 |
| PFEL 5 | 98 | 59.5 | 40.5 | 0 |
| PFEL 6 | 78 | 56.8 | 42.6 | 0.6 |
| PFEL 7 | 80 | 68.6 | 30.9 | 0.5 |
| PFEL 8 | 114 | 67.2 | 31.3 | 1.1 |

(continued)

| Fluoropolymer | $ML_{1+20}$ (170°C) | Composition of fluoropolymer (mol%) | | |
|---|---|---|---|---|
| | | TFE | PMVE | CNVE |
| PFEL 9 | unmeasurable | 77.6 | 21.9 | 0.5 |

[Table 2]

| Fluoropolymer | mp (°C) | MFR (g/10 min) | Composition of fluoropolymer (mol%) | | | |
|---|---|---|---|---|---|---|
| | | | TFE | Ethylene | VDF | HFP |
| FKM | - | - | 0 | 0 | 78 | 22 |
| TFE/HFP/VDF | 119 | 8.5 | 39 | 0 | 51 | 11 |
| * MFR measurement for PVDF: 230°C, 49 N<br>* MFR measurement for TFE/HFP/VDF: 265°C. 49 N | | | | | | |

[Table 3]

| | Processing aid | Die pressure (MPa) | | | |
|---|---|---|---|---|---|
| | | 30 rpm | 10 rpm | 80 rpm | 5 rpm |
| Example 1 | PFEL 1 + SI | 19.8 | 10.6 | 34.1 | 7.3 |
| Example 2 | PFEL 2 + SI | 23.5 | 12.7 | 33.8 | 9.0 |
| Example 3 | PFEL 3 + SI | 23.9 | 11.0 | 34.2 | 10.1 |
| Example 4 | PFEL 4 + SI | 20.6 | 10.4 | 34.4 | 7.9 |
| Example 5 | PFEL 5 + SI | 22.4 | 11.4 | 33.6 | 7.0 |
| Example 6 | PFEL 6 + SI | 20.8 | 10.0 | 33.3 | 12.5 |
| Example 7 | PFEL 7 + SI | 19.1 | 10.6 | 32.5 | 12.4 |
| Example 8 | PFEL 8 + SI | 22.6 | 12.8 | 34.6 | 12.6 |
| Example 9 | PFEL 9 + SI | 21.3 | 13.5 | 32.5 | 12.5 |
| Comparative Example 1 | Not added | 31.5 | 19.1 | 37.9 | 12.7 |
| Comparative Example 2 | FKM + SI | 26.0 | 14.0 | 38.5 | 11.2 |
| Comparative Example 3 | FKM + PEG | 26.7 | 16.0 | 38.4 | 11.9 |
| Comparative Example 4 | PVDF | 24.3 | 11.6 | 37.2 | 7.6 |
| Comparative Example 5 | TFE/HFP/VDF | 24.3 | 12.1 | 35.6 | 9.4 |

The abbreviations in the tables represent the following.

TFE: tetrafluoroethylene

PMVE: $CF_2=CFOCF_3$

CNVE: $CF_2=CFOCF_2CF(CF_3)OCF_2CF_2CN$

VDF: vinylidene fluoride

HFP: hexafluoropropylene

SI: anti re-agglomerating agent

Table 3 shows that use of the processing aid of the present invention led to a greater pressure decrease at 30 rpm and 80 rpm than in Comparative Examples 2 to 5.

Table 4 shows the shear rates calculated by the following formula.

[Math. 1]

$$Y = \frac{4Q}{\pi R^3}$$

The abbreviations in the formula represent the following.

Y: shear rate ($sec^{-1}$)
Q: amount of matter extruded (kg/hr)
R: diameter of die (mm)

[Table 4]

| Screw rotational speed | rpm | 30 | 10 | 80 | 5 |
|---|---|---|---|---|---|
| Shear rate | $sec^{-1}$ | 445 | 129 | 1187 | 59 |

(Extrusion evaluation 2)

(Example 10)

The masterbatch containing the processing aid used in Example 1 was added to and tumble-mixed with linear low-density polyethylene (LLDPE 1201XV, ExxonMobil Corp.) such that the amount of the masterbatch was 1 wt% based on the sum of the weights of the linear low-density polyethylene and the masterbatch. The resulting masterbatch-containing linear low-density polyethylene was extruded using a single screw extruder (Rheomex OS, HAAKE, L/D: 33, screw diameter: 20 mm) at a cylinder temperature of 170°C to 200°C, a die temperature of 200°C, and a screw rotational speed of 80 rpm. The die pressure change and the melt fracture change were observed.

(Examples 11 to 13)

The extrusion evaluation was performed in the same manner as in Example 10 except that the processing aid-containing masterbatch used in Example 1 was added such that the amount thereof was 0.05, 0.02, or 0.01 wt% based on the sum of the weights of the linear low-density polyethylene and the masterbatch.

(Comparative Examples 6, 7, and 8)

The extrusion evaluation was performed in the same manner as in Example 10 except that the processing aid-containing masterbatch used in Comparative Examples 2, 3, or 5 was used.

Table 5 shows the evaluation results and other data in Examples 10 to 13 and Comparative Examples 6 to 8. Fig. 2 shows the die pressure changes over time in the extrusion processes of Examples 10 to 13 and Comparative Examples 6 to 8.

[Table 5]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 10 | PFEL 1 + SI | 500 | 3.1 | 10 | Glossy |

(continued)

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 11 | PFEL 1 + SI | 25 | 3.1 | 20 | Glossy |
| Example 12 | PFEL 1 + SI | 10 | 2.3 | 30 | Glossy |
| Example 13 | PFEL 1 + SI | 5 | 1.8 | 40 | Glossy |
| Comparative Example 6 | FKM + SI | 500 | Note 1) | 70 or longer | Shark skin |
| Comparative Example 7 | FKM + PEG | 500 | Note 2) | 70 or longer | Shark skin |
| Comparative Example 8 | TFE/HFP/VDF | 500 | 1.6 | 70 or longer | Shark skin |
| Note 1) Extrusion pressure increased by 0.5 MPa<br>Note 2) Failed to achieve stable extrusion | | | | | |

In Table 5, the concentration (ppm) of the processing aid added means the proportion of the processing aid based on the sum of the weights of the linear low-density polyesthylene and the masterbatch.

Table 5 and Fig. 2 show the following. In Example 10, the pressure decreased by 3.1 MPa within 10 minutes from the start of adding the masterbatch, and the melt fracture completely disappeared. In Examples 11 to 13, the amount of pressure decreased was reduced as the concentration of the processing aid added decreased. Still, the melt fracture completely disappeared within 70 minutes from the addition even when the concentration of the processing aid added was 5 ppm. In contrast, in Comparative Example 6, the extrusion pressure conversely increased by 0.5 MPa. Comparative Example 7 failed to provide stable extrusion. In Comparative Example 8, the pressure decreased by 1.6 MPa. In Comparative Examples 6 to 8, the melt fracture did not disappear even after 70 minutes from the start of adding the masterbatch.

(Extrusion evaluation 3)

(Examples 14, 15, and 16)

The extrusion evaluation was performed in the same manner as in Extrusion evaluation 2 except that the processing aid-containing masterbatch used in Example 1, 4, or 5 was used, the cylinder temperature was set to 210°C to 240°C, and the die temperature was set to 240°C. The shear rate calculated from the formula of Math. 1 was about 1,200 $sec^{-1}$.

(Comparative Examples 9, 10, 11)

The extrusion evaluation was performed in the same manner as in one of Examples 14 to 16 except that the processing aid-containing masterbatch used in Comparative Example 2, 3, or 5 was used.

Table 6 shows the evaluation results and other data in Examples 14 to 16 and Comparative Examples 9 to 11. Fig. 3 shows the die pressure changes over time in the extrusion processes of Examples 14 to 16 and Comparative Examples 9 to 11.

[Table 6]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 14 | PFEL 1 + SI | 500 | 9.5 | 10 | Glossy |
| Example 15 | PFEL 4 + SI | 500 | 8.1 | 10 | Glossy |
| Example 16 | PFEL 5 + SI | 500 | 7.4 | 10 | Glossy |

(continued)

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Comparative Example 9 | FKM + SI | 500 | 4.6 | 70 or longer | Shark skin |
| Comparative Example 10 | FKM + PEG | 500 | 4.3 | 70 or longer | Shark skin |
| Comparative Example 11 | TFE/HFP/VDF | 500 | 5.6 | 20 | Glossy |

Table 6 and Fig. 3 show the following. In Examples 14 to 16, the melt fracture completely disappeared within 10 minutes from the start of adding the masterbatch. In contrast, in Comparative Examples 9 and 10, the pressure decrease (amount ΔP of pressure decreased) was smaller than in Examples 14 to 16, and the melt fracture did not completely disappear even after 70 minutes from the start of adding the masterbatch. In Comparative Example 11, the pressure decrease (amount ΔP of pressure decreased) was smaller than in Examples 14 to 16, and the period of time until the melt fracture completely disappeared was longer than in Examples 14 to 16.

(Examples 17 to 20)

The extrusion evaluation was performed in the same manner as in Example 15 except that the processing aid-containing masterbatch used in Example 14 was added such that the amount thereof was 0.2, 0.1, 0.05, or 0.02 wt% based on the sum of the weights of the linear low-density polyethylene and the masterbatch.

(Comparative Example 12)

The extrusion evaluation was performed in the same manner as in Comparative Example 11 except that the processing aid-containing masterbatch used in Comparative Example 11 was added such that the amount thereof was 0.2 wt% based on the sum of the weights of the linear low-density polyethylene and the masterbatch.

Table 7 shows the evaluation results and other data in Examples 14 and 17 to 20 and Comparative Examples 9 to 12. Fig. 4 shows the die pressure changes over time in the extrusion processes of Examples 14 and 17 to 20 and Comparative Examples 9 to 12.

[Table 7]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 14 | PFEL 1 + SI | 500 | 9.5 | 10 | Glossy |
| Example 17 | PFEL 1 + SI | 100 | 6.8 | 10 | Glossy |
| Example 18 | PFEL 1 + SI | 50 | 5.5 | 10 | Glossy |
| Example 19 | PFEL 1 + SI | 25 | 3.6 | 20 | Glossy |
| Example 20 | PFEL 1 + SI | 10 | 1.2 | 40 | Glossy |
| Comparative Example 9 | FKM + SI | 500 | 4.6 | 70 or longer | Shark skin |
| Comparative Example 10 | FKM + PEG | 500 | 4.3 | 70 or longer | Shark skin |
| Comparative Example 11 | TFE/HFP/VDF | 500 | 5.6 | 20 | Glossy |
| Comparative Example 12 | TFE/HFP/VDF | 100 | 3.6 | 70 or longer | Shark skin |

Table 7 and Fig. 4 show the following. In Examples 14 and 17 to 20, the melt fracture disappearance time became longer as the concentration of the processing aid added decreased. Still, the melt fracture completely disappeared within 10 to 40 minutes. In contrast, in Comparative Examples 9, 10, and 12, the pressure decrease was observed, but the melt fracture did not completely disappear even after 70 minutes from the start of adding the masterbatch. In Comparative Example 11, the pressure decrease was observed and the melt fracture completely disappeared, but the melt fracture disappearance time was longer than in Example 14 in which the same concentration of the processing aid was added.

(Extrusion evaluation 4)

(Example 21)

The extrusion evaluation was performed in the same manner as in Extrusion evaluation 2 except that the processing aid-containing masterbatch used in Example 4 was used, the cylinder temperature was set to 250°C to 280°C, and the die temperature was set to 280°C. The shear rate calculated from the formula of Math. 1 was about 1,190 $sec^{-1}$.

(Examples 22 and 23)

The extrusion evaluation was performed in the same manner as in Example 21 except that the processing aid-containing masterbatch used in Example 21 was added such that the amount thereof was 0.2 or 0.1 wt% based on the sum of the weights of the linear low-density polyethylene and the masterbatch.

(Comparative Example 13)

The extrusion evaluation was performed in the same manner as in Example 21 except that the processing aid-containing masterbatch used in Comparative Example 5 was used.

Table 8 shows the evaluation results and other data in Examples 21 to 23 and Comparative Example 13. Fig. 5 shows the die pressure changes over time in the extrusion processes of Examples 21 to 23 and Comparative Example 13.

[Table 8]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 21 | PFEL 4 + SI | 500 | 8.3 | 10 | Glossy |
| Example 22 | PFEL 4 + SI | 100 | 5.9 | 10 | Glossy |
| Example 23 | PFEL 4 + SI | 50 | 4.5 | 10 | Glossy |
| Comparative Example 13 | TFE/HFP/VDF | 500 | 5.4 | 40 | Glossy |

Table 8 and Fig. 5 show the following. In Examples 21 to 23, the melt fracture completely disappeared within 10 minutes from the start of adding the masterbatch. In Comparative Example 13, the amount of pressure decreased is smaller and the period of time from the start of adding the masterbatch to the disappearance of the melt fracture was longer than in Example 21 in which the same concentration of the processing aid was added.

(Extrusion evaluation 5) <Evaluation 1 with ultra-high shear rate>

(Examples 24 to 26)

The masterbatch containing PFEL 7 + anti reagglomerating agent, PFEL 4 + PEG, or PFEL 7 + PEG as the processing aid was added to and tumble-mixed with linear low-density polyethylene (LLDPE 1201XV, ExxonMobil Corp.) such that the amount of the masterbatch was 1 wt% based on the sum of the weights of the linear low-density polyethylene and the masterbatch. The resulting masterbatch-containing linear low-density polyethylene was extruded using a single screw extruder (Rheomex OS, HAAKE, L/D: 33, screw diameter: 20 mm) at a cylinder temperature of 190°C to 220°C, a die temperature of 220°C, and a screw rotational speed of 70 rpm. The die pressure change and the melt fracture change were observed. The shear rate calculated by the formula of Math. 1 was about 2,500 $sec^{-1}$.

(Comparative Example 14)

The extrusion evaluation was performed in the same manner as in Example 24 except that the processing aid-containing masterbatch used in Comparative Example 5 was used.

Table 9 shows the evaluation results and other data in Examples 24 to 26 and Comparative Example 14. Fig. 6 shows the die pressure changes over time in the extrusion processes of Examples 24 to 26 and Comparative Example 14.

[Table 9]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 24 | PFEL 7 + SI | 500 | 1.7 | 10 | Glossy |
| Example 25 | PFEL 4 + PEG | 500 | 1.9 | 10 | Glossy |
| Example 26 | PFEL 7 + PEG | 500 | 2.1 | 20 | Glossy |
| Comparative Example 14 | TFE/HFP/VDF | 500 | 1.4 | 70 or longer | Shark skin |

Table 9 and Fig. 6 show the following. In Examples 24 to 26, the melt fracture completely disappeared within 70 minutes from the start of adding the masterbatch. In Comparative Example 14, the amount of pressure decreased was smaller than in Example 24 in which the same concentration of the processing aid was added, and the melt fracture did not completely disappear even after 70 minutes from the start of adding the masterbatch.

(Extrusion evaluation 6) <Evaluation 2 with ultra-high shear rate>

(Examples 27 to 29)

The processing aid-containing masterbatch used in Example 4 was added to and tumble-mixed with linear low-density polyethylene (LLDPE 1201XV, ExxonMobil Corp.) such that the amount of the masterbatch was 1, 0.1, or 0.05 wt% based on the sum of the weights of the linear low-density polyethylene and the masterbatch. The resulting masterbatch-containing linear low-density polyethylene was extruded using a single screw extruder (Rheomex OS, HAAKE, L/D: 33, screw diameter: 20 mm) at a cylinder temperature of 210°C to 240°C, a die temperature of 240°C, and a screw rotational speed of 70 rpm. The die pressure change and the melt fracture change were observed. The shear rate calculated by the formula of Math. 1 was about 2,400 $sec^{-1}$.

(Comparative Example 15)

The extrusion evaluation was performed in the same manner as in Example 27 except that the processing aid-containing masterbatch used in Comparative Example 5 was used.

Table 10 shows the evaluation results and other data in Examples 27 to 29 and Comparative Example 15. Fig. 7 shows the die pressure changes over time in the extrusion processes of Examples 27 to 29 and Comparative Example 15.

[Table 10]

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Example 27 | PFEL 4 + SI | 500 | 6.0 | 10 | Glossy |
| Example 28 | PFEL 4 + SI | 50 | 2.9 | 10 | Glossy |
| Example 29 | PFEL 4 + SI | 25 | 2.6 | 10 | Glossy |

(continued)

| | Processing aid | Concentration of processing aid added (ppm) | Amount (ΔP) of pressure decrease (MPa) | Melt fracture disappearance time (min) | Appearance of extrudate after test |
|---|---|---|---|---|---|
| Comparative Example 15 | TFE/HFP/VDF | 500 | 2.3 | 70 or longer | Shark skin |

Table 10 and Fig. 7 show the following. In Examples 27 to 29, the melt fracture completely disappeared within 70 minutes from the start of adding the masterbatch. In Comparative Example 15, the amount of pressure decreased was smaller than in Example 27 in which the same concentration of the processing aid was added, and the melt fracture did not completely disappear even after 70 minutes from the start of adding the masterbatch.

INDUSTRIAL APPLICABILITY

Since the processing aid for polyolefins and the polyolefin composition of the present invention have the aforementioned configurations, they can be used in a wide variety of fields for films, bags, coating materials, tablewares such as containers for beverages, electric wires, cables, pipes, fibers, bottles, gasoline tanks, and other molded articles in various industries.

## Claims

1. A processing aid for polyolefins comprising a perfluoroelastomer,
the processing aid being intended to be used for extrusion-molding at least one polyolefin selected from the group consisting of low-density polyethylene, linear low-density polyethylene, high-density polyethylene, metallocene linear low-density polyethylene, polypropylene, and polyvinyl chloride.

2. The processing aid for polyolefins according to claim 1,
wherein the perfluoroelastomer is a copolymer of tetrafluoroethylene and at least one fluoromonomer selected from the group consisting of:

hexafluoropropylene;
a fluoromonomer represented by the formula (8):

$$CF_2=CF\text{-}ORf^{81}$$

wherein $Rf^{81}$ is a C1-C8 perfluoroalkyl group;
a fluoromonomer represented by the formula (10):

$$CF_2=CFOCF_2ORf^{101}$$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$$CF_2=CFO(CF_2CF(Y)O)_m(CF_2)_nF$$

wherein Y is a fluorine atom or a trifluoromethyl group; m is an integer of 1 to 4; and n is an integer of 1 to 4.

3. The processing aid for polyolefins according to claim 1 or 2,
wherein the perfluoroelastomer is a copolymer of tetrafluoroethylene and a fluoromonomer represented by the formula (8):

$$CF_2=CF\text{-}ORf^{81}$$

wherein $Rf^{81}$ is a C1-C8 perfluoroalkyl group.

4. The processing aid for polyolefins according to claim 1, 2, or 3, wherein the perfluoroelastomer is a copolymer of tetrafluoroethylene and perfluoro(methyl vinyl ether).

5. The processing aid for polyolefins according to claim 1, 2, 3, or 4, further comprising 1 to 99 wt% of at least one surfactant selected from the group consisting of silicone-polyether copolymers, aliphatic polyesters, aromatic polyesters, polyether polyols, amine oxides, carboxylic acids, aliphatic esters, and poly(oxyalkylenes).

6. A polyolefin composition comprising a processing aid for polyolefins, and
a polyolefin,
the processing aid for polyolefins containing a perfluoroelastomer,
the polyolefin being at least one selected from the group consisting of low-density polyethylene, linear low-density polyethylene, high-density polyethylene, metallocene linear low-density polyethylene, polypropylene, and polyvinyl chloride.

7. The polyolefin composition according to claim 6,

wherein the perfluoroelastomer is a copolymer of tetrafluoroethylene and at least one fluoromonomer selected from the group consisting of:

hexafluoropropylene;
a fluoromonomer represented by the formula (8):

$$CF_2=CF\text{-}ORf^{81}$$

wherein $Rf^{81}$ is a C1-C8 perfluoroalkyl group;
a fluoromonomer represented by the formula (10):

$$CF_2=CFOCF_2ORF^{101}$$

wherein $Rf^{101}$ is a C1-C6 linear or branched perfluoroalkyl group, a C5-C6 cyclic perfluoroalkyl group, or a C2-C6 linear or branched perfluorooxyalkyl group containing 1 to 3 oxygen atoms; and
a fluoromonomer represented by the formula (11):

$$CF_2=CFO(CF_2CF(Y)O)_m(CF_2)_nF$$

wherein Y is a fluorine atom or a trifluoromethyl group; m is an integer of 1 to 4; and n is an integer of 1 to 4.

8. The polyolefin composition according to claim 6 or 7,
wherein the perfluoroelastomer is a copolymer of tetrafluoroethylene and a fluoromonomer represented by the formula (8):

$$CF_2=CF\text{-}ORf^{81}$$

wherein $Rf^{81}$ is a C1-C8 perfluoroalkyl group.

9. The polyolefin composition according to claim 6, 7, or 8,
wherein the perfluoroelastomer is a copolymer of tetrafluoroethylene and perfluoro(methyl vinyl ether).

10. The polyolefin composition according to claim 6, 7, 8, or 9,
wherein the processing aid for polyolefins further contains 1 to 99 wt% of at least one surfactant selected from the group consisting of silicone-polyether copolymers, aliphatic polyesters, aromatic polyesters, polyether polyols, amine oxides, carboxylic acids, aliphatic esters, and poly(oxyalkylenes).

11. The polyolefin composition according to claim 6, 7, 8, 9, or 10,
wherein the processing aid for polyolefins is present in an amount of 0.0005 to 10 wt% based on the total weight of the polyolefin composition.

# FIG.1

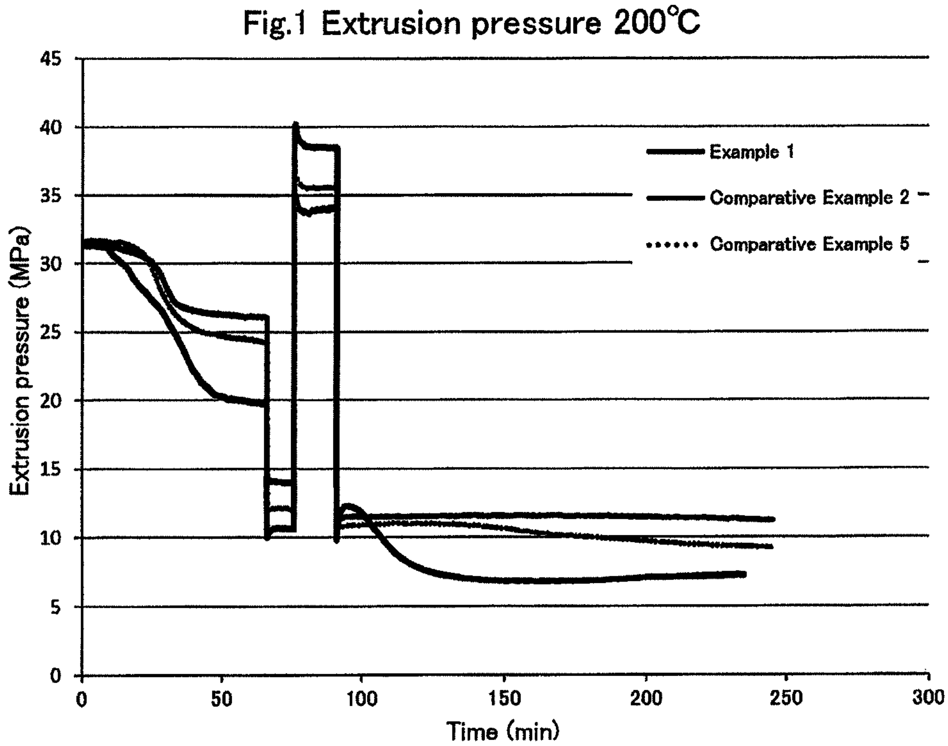
Fig.1 Extrusion pressure 200°C
Extrusion pressure (MPa)
Time (min)
0
5
10
15
20
25
30
35
40
45
0
50
100
150
200
250
300
Example 1
Comparative Example 2
Comparative Example 5

# FIG.2

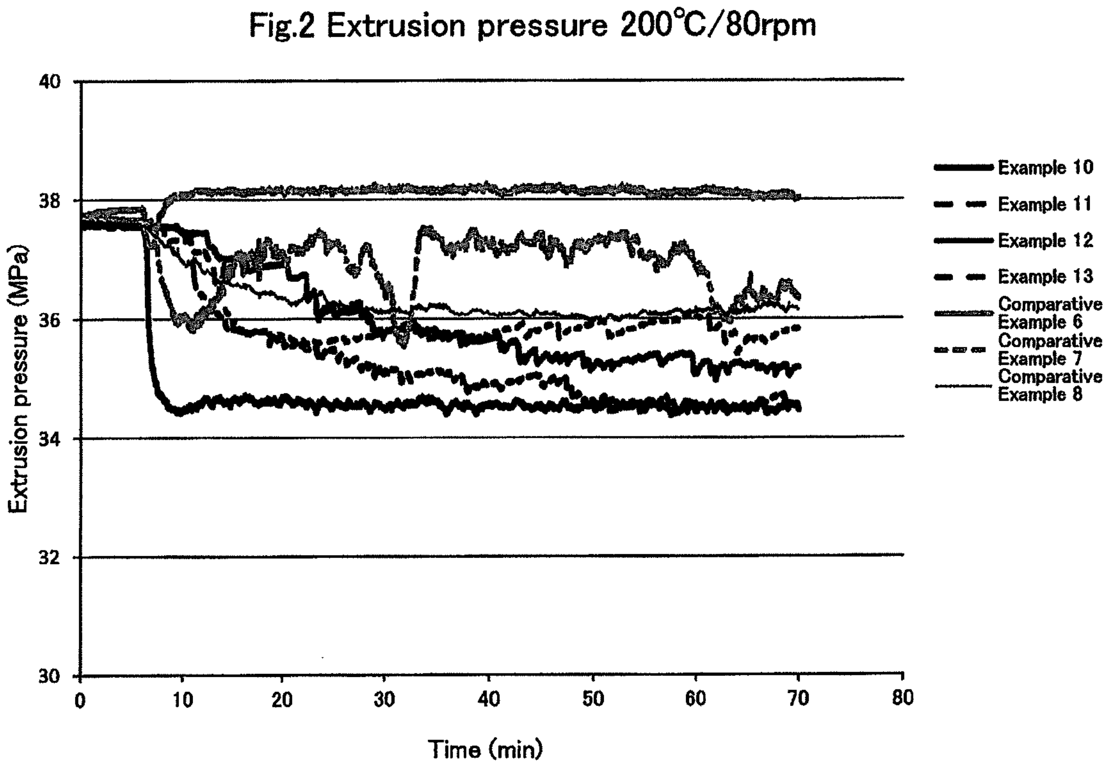
Fig.2 Extrusion pressure 200°C/80rpm
Extrusion pressure (MPa)
Time (min)
30
32
34
36
38
40
0
10
20
30
40
50
60
70
80
Example 10
Example 11
Example 12
Example 13
Comparative Example 6
Comparative Example 7
Comparative Example 8

# FIG.3

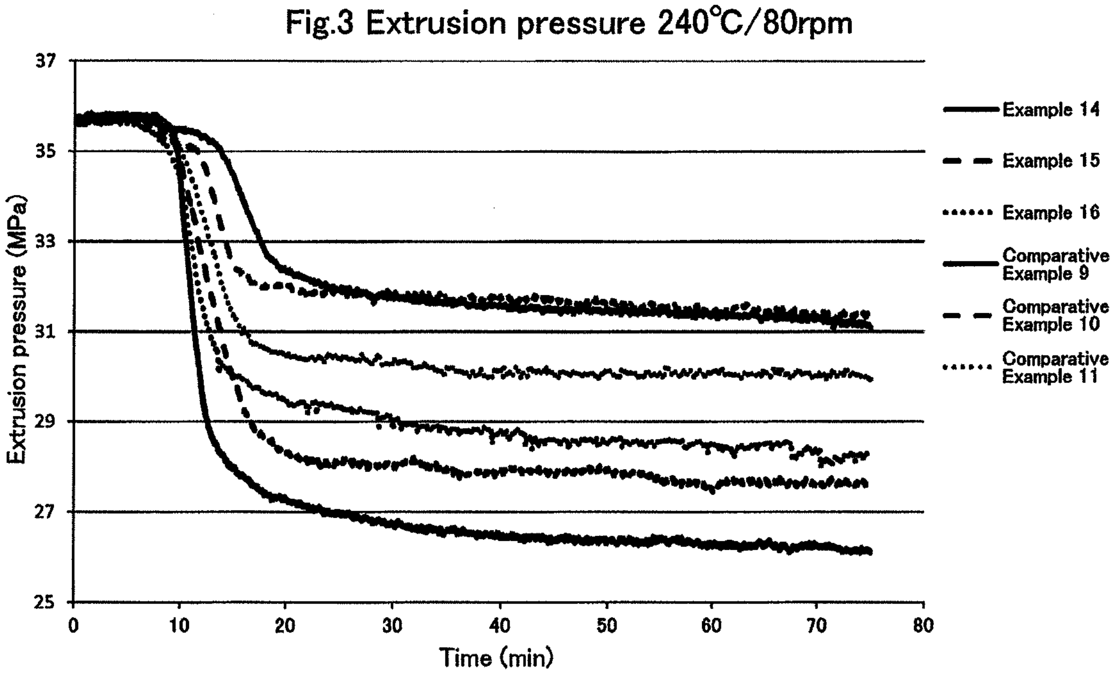
Fig.3 Extrusion pressure 240°C/80rpm
Extrusion pressure (MPa)
37
35
33
31
29
27
25
Time (min)
0
10
20
30
40
50
60
70
80
Example 14
Example 15
Example 16
Comparative Example 9
Comparative Example 10
Comparative Example 11

# FIG.4

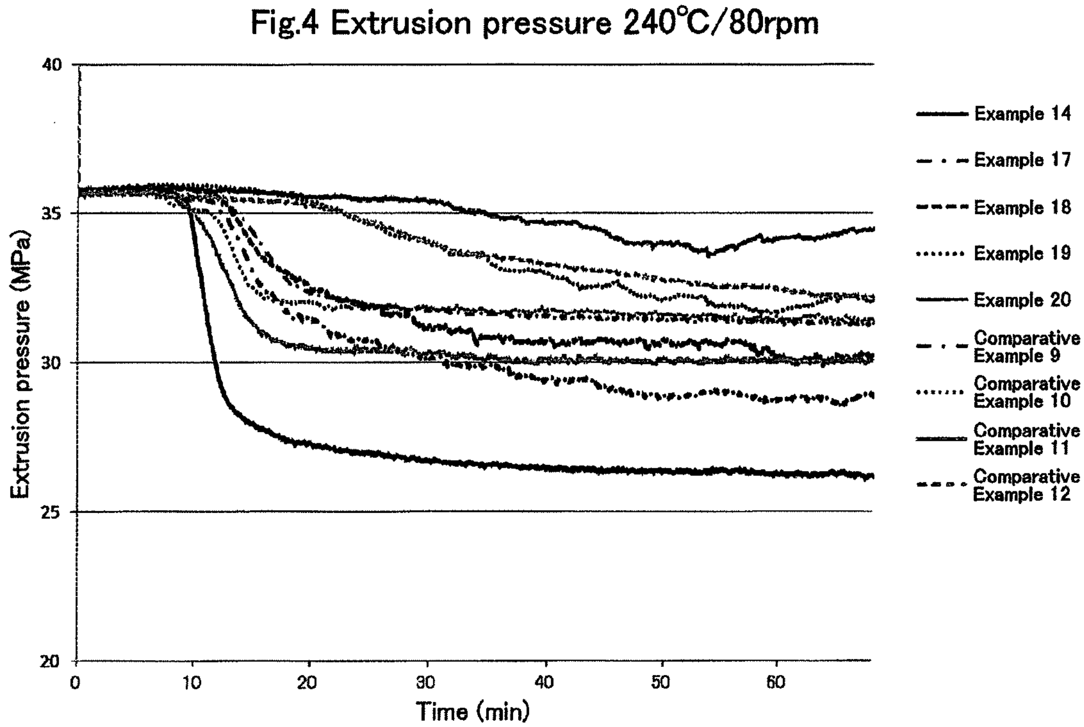
Fig.4 Extrusion pressure 240°C/80rpm
Extrusion pressure (MPa)
40
35
30
25
20
Time (min)
0
10
20
30
40
50
60
Example 14
Example 17
Example 18
Example 19
Example 20
Comparative Example 9
Comparative Example 10
Comparative Example 11
Comparative Example 12

# FIG.5

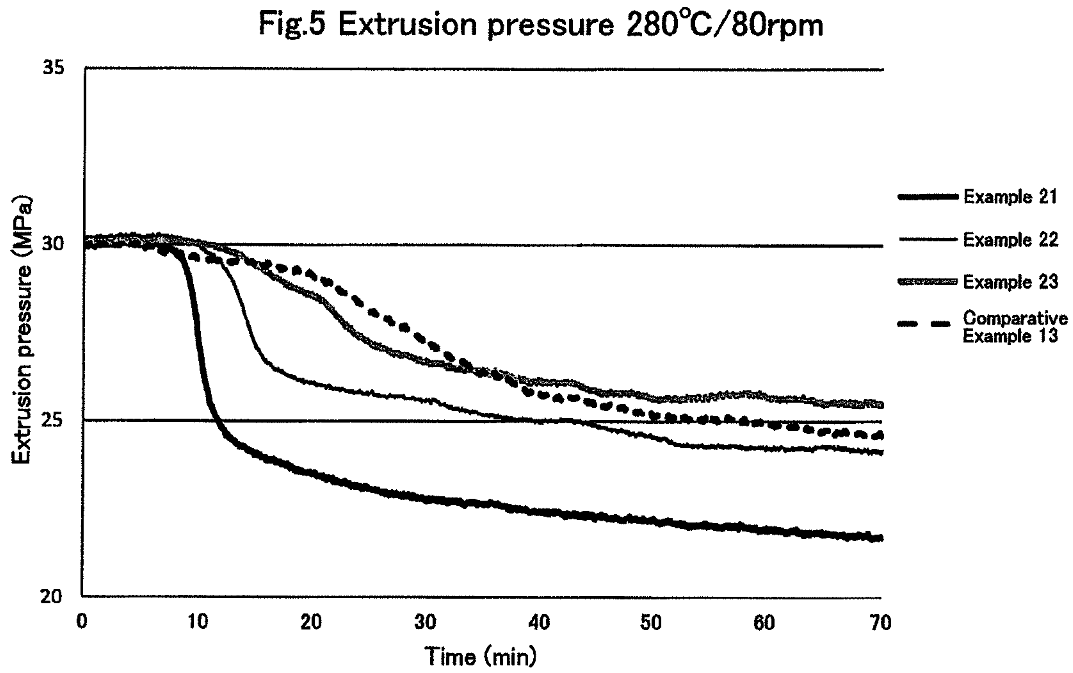
Fig.5 Extrusion pressure 280°C/80rpm
35
30
25
20
Extrusion pressure (MPa)
0
10
20
30
40
50
60
70
Time (min)
Example 21
Example 22
Example 23
Comparative Example 13

# FIG.6

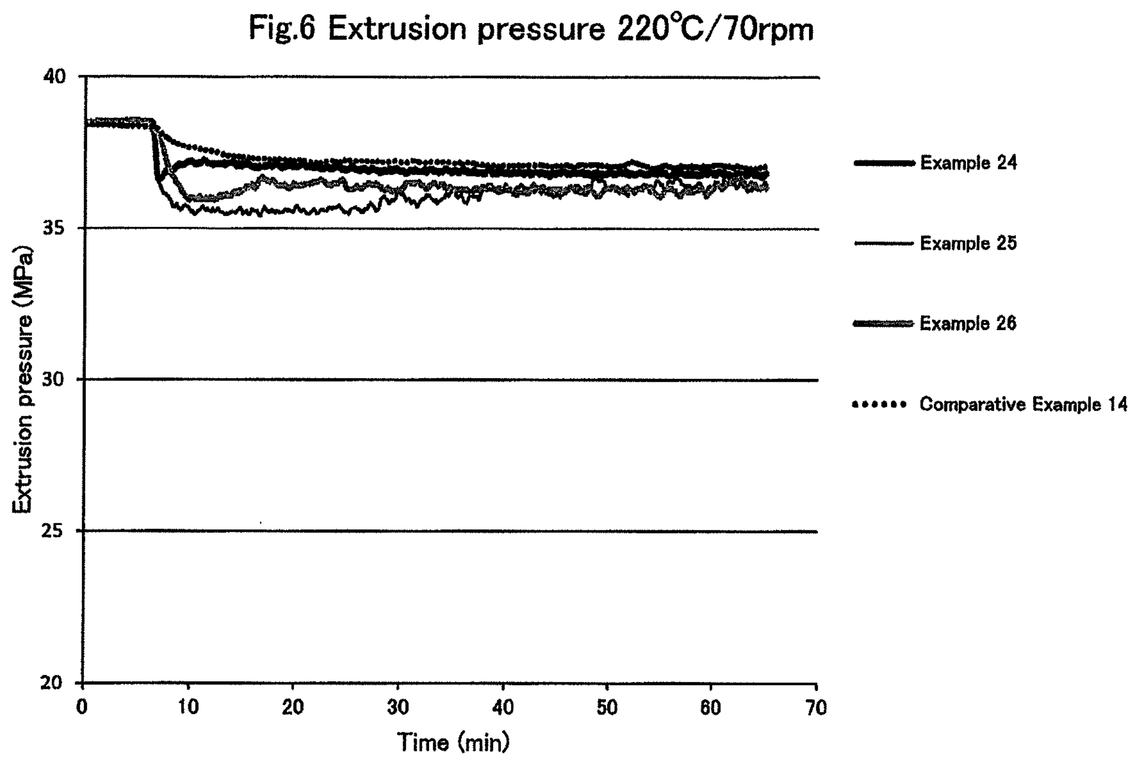
Fig.6 Extrusion pressure 220°C/70rpm
40
35
30
25
20
Extrusion pressure (MPa)
0
10
20
30
40
50
60
70
Time (min)
Example 24
Example 25
Example 26
Comparative Example 14

FIG.7

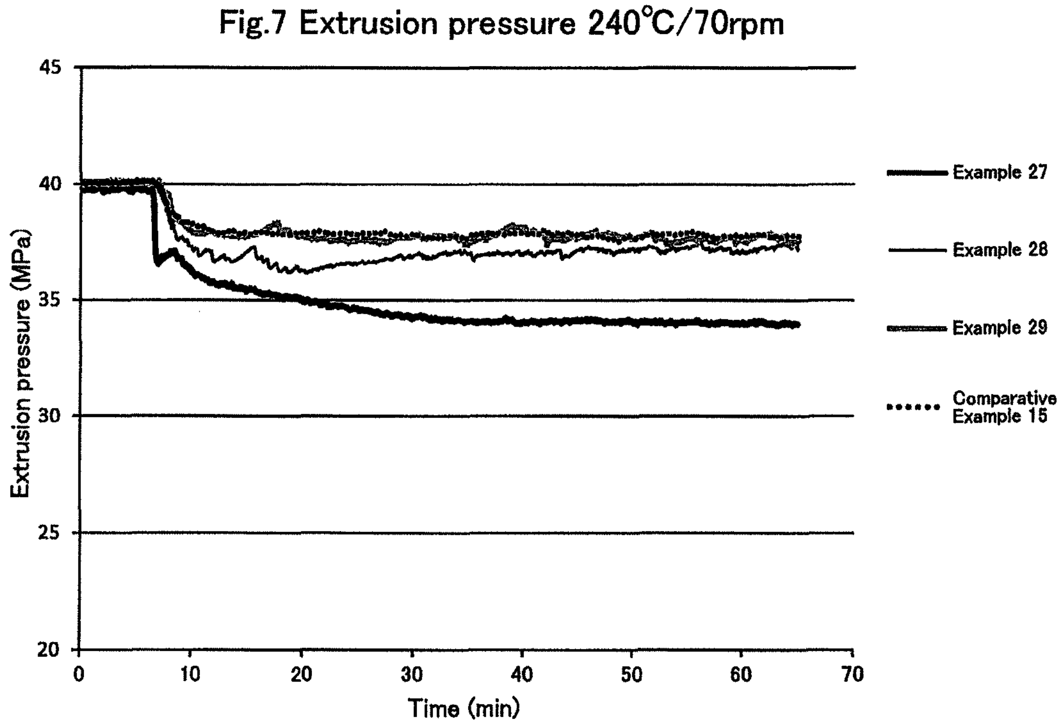
Fig.7 Extrusion pressure 240°C/70rpm
45
40
35
30
25
20
Extrusion pressure (MPa)
0
10
20
30
40
50
60
70
Time (min)
Example 27
Example 28
Example 29
Comparative Example 15

**INTERNATIONAL SEARCH REPORT**

International application No. PCT/JP2014/083958

**A. CLASSIFICATION OF SUBJECT MATTER**

*C08L27/18*(2006.01)i, *C08F214/26*(2006.01)i, *C08K5/09*(2006.01)i, *C08K5/10*(2006.01)i, *C08L67/00*(2006.01)i, *C08L71/00*(2006.01)i, *C08L83/12*(2006.01)i

According to International Patent Classification (IPC) or to both national classification and IPC

**B. FIELDS SEARCHED**

Minimum documentation searched (classification system followed by classification symbols)
C08L27/18, C08F214/26, C08K5/09, C08K5/10, C08L67/00, C08L71/00, C08L83/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2007-510003 A (DuPont Performance Elastomers L.L.C.), 19 April 2007 (19.04.2007), claims 1 to 9; paragraphs [0008] to [0010], [0016], [0023], [0027], [0028] & US 2005/0043456 A1 & EP 1656421 B1 & WO 2005/019334 A1 & DE 602004003398 D & CA 2534229 A & BR PI0412622 A | 1-11 |
| A | JP 2005-508429 A (DuPont Dow Elastomers L.L.C.), 31 March 2005 (31.03.2005), claims 1 to 20; paragraphs [0010], [0018], [0033], [0034] & US 2003/0100680 A1 & EP 1448700 A1 & WO 2003/040232 A1 & CA 2466113 A | 1-11 |

☒ Further documents are listed in the continuation of Box C.　　☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 27 January 2015 (27.01.15) | 10 February 2015 (10.02.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2014/083958

C (Continuation). DOCUMENTS CONSIDERED TO BE RELEVANT

| Category* | Citation of document, with indication, where appropriate, of the relevant passages | Relevant to claim No. |
|---|---|---|
| A | JP 2-70737 A (Minnesota Mining and Manufacturing Co.), 09 March 1990 (09.03.1990), claims; page 5, lower left column, line 9 to lower right column, line 17; pages 7 to 13, examples<br>& US 4855360 A & US 5015693 A<br>& CA 1339520 A & KR 10-0154115 B<br>& AU 619820 B | 1-11 |
| A | JP 2002-544358 A (Dyneon L.L.C.), 24 December 2002 (24.12.2002), claims 1 to 24; paragraphs [0012], [0027], [0051] to [0063]<br>& US 6277919 B1 & EP 1591484 A1<br>& WO 2000/069967 A1 & DE 69928573 D<br>& AU 6146999 A & CA 2372212 A<br>& AT 515535 T | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4181042 B
- JP 2002544358 T
- JP H0270737 A
- JP 2007510003 T
- WO 2011025052 A
- US 5013792 B
- WO 03044088 A
- WO 9724381 A
- JP S6157324 B
- JP H0481608 B
- JP H0513961 B
- WO 01023470 A
- WO 9950319 A
- JP 5140902 B
- JP 4834971 B
- US 6277919 B1